# EUROPÄISCHE PATENTSCHRIFT

(11) **EP 3 829 917 B1**
(45) Veröffentlichungstag und Bekanntmachung des Hinweises auf die Patenterteilung: **12.07.2023**
(21) Anmeldenummer: 19769071.2
(22) Anmeldetag: 03.09.2019
(51) Int. Cl.: B60L 1/00, B60L 15/32, B61L 15/00, G01R 31/00, B60L 3/12

(54) **VORRICHTUNG UND VERFAHREN ZUR ENERGIEVERSORGUNG EINER SENSOREINRICHTUNG IN EINEM SCHIENENFAHRZEUG**
APPARATUS AND METHOD FOR POWER SUPPLY TO A SENSOR DEVICE IN A RAIL VEHICLE
DISPOSITIF ET PROCÉDÉ POUR ALIMENTER DE PUISSANCE À UN DISPOSITIF CAPTEUR DANS UN VÉHICULE FERROVIAIRE

(30) Priorität: 26.09.2018 DE 102018216436
(43) Veröffentlichungstag der Anmeldung: 09.06.2021
(73) Patentinhaber: Siemens Mobility GmbH, 81739 München (DE)
(72) Erfinder: KÖRNER, Olaf, 90469 Nürnberg (DE); WOKUSCH, Simon Matthias, 91058 Erlangen (DE)
(74) Vertreter: Siemens Patent Attorneys
(86) Internationale Anmeldenummer: PCT/EP2019/073388
(87) Internationale Veröffentlichungsnummer: WO 2020/064274

(56) Entgegenhaltungen:
- EP-A1- 3 299 825
- WO-A1-2012/063439
- DE-A1-102009 043 225
- DE-A1-102012 220 660
- DE-A1-102016 109 263
- DE-T5-112011 104 872
- US-A1- 2017 047 876

## Beschreibung

Die Erfindung betrifft die Versorgung einer Sensoreinrichtung in einem Schienenfahrzeug mit elektrischer Energie. Die Sensoreinrichtung bzw. jeweilige Sensoren kann bzw. können insbesondere im Bereich einer Fahrzeugkomponente des Schienenfahrzeugs angeordnet sein.

Eine elektronische Vorrichtung in oder an einem Schienenfahrzeug, insbesondere am Motor oder Getriebe, speziell in oder an einem Drehgestell des Schienenfahrzeuges, soll mit einer sicheren und ausreichenden Energieversorgung ausgestattet sein. Die elektronische Vorrichtung kann einen Sensor zur Erfassung von Daten wie zum Beispiel von Beschleunigungen, Drehzahlen oder Temperaturen aufweisen. Ein Sensor kann auch verwendet werden, um den Zustand von Verschleißkomponenten zu erfassen, wie zum Beispiel von Motor- und Getriebelagern.

Bekannte so genannte Sensorboxen, die zur Installation von Sensoren an einem Motor oder Getriebe angebracht werden, enthalten üblicherweise Batterien, die den Sensor bzw. weitere Komponenten der Sensorbox mit elektrischer Energie versorgen. Die Kapazität der Batterien ist zu gering für einen kontinuierlichen Betrieb des Sensors und eine ständige Datenübertragung über eine längere Zeit. Zudem kann die Lebensdauer der Batterien durch die Umgebungsbedingungen, wie zum Beispiel durch Temperaturschwankungen, erheblich verringert werden. Ein häufiger Austausch der Batterien kann deshalb erforderlich werden, was aber wegen der üblicherweise eingeschränkten Zugänglichkeit der Sensorbox möglichst vermieden werden soll.

In der DE 10 2009 043 225 A1 werden verschiedene lokale Energieversorgungen von Sensoren im Drehgestell bzw. Fahrwerk angegeben. Hierbei wird vorgeschlagen, die Wärmeentwicklung im Radlager zu nutzen, oder die kinetische Energie der durch die Radsätze und Radsatzlager gebildeten sich drehenden Komponenten mit Hilfe von Induktionsspulen in elektrische Energie umzusetzen. Es wird auch vorgeschlagen, diverse auftretende Relativbewegungen oder Verformungen, insbesondere am Radsatzlager und am Fahrwerksrahmen auftretende Schwingungen und Stöße, mit Hilfe von Piezo-Elementen zur Erzeugung elektrischer Energie zu nutzten.

DE 11 2011 104 872 T5 offenbart eine sensorgestützte Vorrichtung zur Rückgewinnung elektrischer Energie in einem elektrischen Fahrzeug mit Gleichstrommotor bekannt. Die Vorrichtung verwendet als Sensor einen Induktor, um Strom gleichzurichten und die Spannung zu regulieren. Eine Primärspule des Induktors ist elektrisch in Reihe mit dem Gleichstrommotor angeordnet. Wenn der Gleichstrommotor arbeitet, erzeugt die Primärspule eine elektromagnetische Induktion und beeinflusst eine Sekundärspule des Induktors, um einen Wechselstrom und eine Spannung an der Sekundärspule zu erzeugen. Der Wechselstrom wird durch eine Gleichrichterbrücke in einen Gleichstrom gerichtet und in die Batterie zur Rückgewinnung eingespeist. Der Induktor ist an einem Zweig eines Wechselspannungs-Zwischenkreises, also zwischen einem ersten Wechselrichter und einer ersten Gleichrichterbrücke, angeordnet. Die erste Gleichrichterbrücke ist ausgangsseitig mit dem Gleichstrommotor verbunden, während der erste Wechselrichter eingangsseitig mit der Batterie verbunden ist.

Aufgabe der vorliegenden Erfindung ist es, eine Energieversorgung für eine Sensoranordnung anzugeben, die keine Batterie oder lange Kabelverbindung erfordert.

Diese Aufgabe wird jeweils durch die jeweiligen Merkmale der Vorrichtung und des Verfahrens der unabhängigen Patentansprüche gelöst. Ausgestaltungen ergeben sich aus den abhängigen Ansprüchen.

Erfindungsgemäß weist eine Vorrichtung zur Energieversorgung einer Sensoranordnung in einem Schienenfahrzeug zumindest einen zweiten elektrischen Leiter auf, der eine induktive Kopplung mit einem ersten elektrischen Leiter aufweist, wobei der erste elektrische Leiter einen Umrichter mit einem Motor des Schienenfahrzeugs verbindet. Weiterhin weist die Vorrichtung ein mittels einer Betriebsspannung betriebenes Schaltungsmodul zur Verarbeitung von Signalen zumindest eines Sensors auf, wobei der zumindest eine Sensor einer Erfassung von Daten und/oder eines Zustands einer Fahrzeugkomponente dient. Dabei ist das Schaltungsmodul mit dem zweiten elektrischen Leiter verbunden und der zweite elektrische Leiter ist zur Erzeugung der Betriebsspannung aus einer an dem ersten Leiter anliegenden Wechselspannung mittels Induktion in dem zweiten elektrischen Leiter konfiguriert. Vorteilhaft ist aufgrund der Erzeugung der erforderlichen Betriebsspannung für das Schaltungsmodul mittels Induktion keine Batterie zur Versorgung des Schaltmoduls erforderlich.

In der Erfindung ist der erste elektrische Leiter als zumindest ein Teil eines Motorkabels ausgestaltet, welches den Umrichter mit dem Motor verbindet. Dies hat insbesondere den Vorteil, dass die Wechselspannung für den Motor auch für die Energieversorgung des Schaltungsmoduls genutzt wird.

In der Erfindung ist der zumindest eine Sensor Teil einer Sensoranordnung und das Schaltungsmodul ist mit der Sensoranordnung verbunden oder ebenfalls Teil der Sensoranordnung. Diese Ausführung besitzt insbesondere den Vorteil einer verbesserten Energieversorgung für eine Sensoranordnung, die beispielsweise direkt an dem Motor oder einem damit verbundenen Getriebe angeordnet ist. In einer weiteren Ausführung der Erfindung ist die Sensoranordnung konfiguriert, Daten des Motors, insbesondere des als ein Antriebsmotor ausgestalteten Motors, eines Getriebes, eines Lüftermotors, eines Pumpenmotors oder eines Kompressormotors als Komponente des Fahrzeugs, welche insbesondere in oder an einem Drehgestell des Schienenfahrzeugs angeordnet ist, zu erfassen.

In einer weiteren Ausführung der Erfindung weist die Vorrichtung eine Komponente zur Gleichrichtung auf, welche zwischen dem zweiten elektrischen Leiter und dem Schaltungsmodul geschaltet ist. Diese Ausführung besitzt insbesondere den Vorteil, dass ein Schaltungsmodul oder ein Sensor mit einer herkömmlichen integrierten Schaltung mit der Energieversorgung betrieben werden kann.

In einer weiteren Ausführung der Erfindung weist die Vorrichtung eine Komponente zur Energiespeicherung auf, welche mit dem zweiten elektrischen Leiter und dem Schaltungsmodul verbunden ist. Diese Ausführung besitzt insbesondere den Vorteil, dass die Energieversorgung auch bei zeitweiliger Unterbrechung der Wechselspannung sichergestellt ist. Der Energiespeicher kann dabei eine deutlich geringere Kapazität als die üblichen Batterien aufweisen, da die Unterbrechungen üblicherweise nur von kürzerer Dauer sind.

In der Erfindung ist zumindest ein Abschnitt des zweiten elektrischen Leiters als eine Wicklung einer Spule ausgestaltet. Dieses Merkmal besitzt insbesondere den Vorteil einer effizienten Induktion.

In der Erfindung weist die Spule einen ringförmigen Kern auf, wobei der Kern den ersten elektrischen Leiter konzentrisch umschließt. Der ringförmige Kern kann dabei insbesondere ein magnetisierbares Material aufweisen. Diese Ausführung besitzt insbesondere den Vorteil, dass die induzierte Spannung besonders hoch ist.

In der Erfindung ist der erste elektrische Leiter als zumindest ein Teil eines Motorkabels ausgestaltet. In einer weiteren Ausführung umschließt die Spule das Motorkabel. die Spule das Motorkabel umschließt.

In einer weiteren Ausführung weist die Vorrichtung weiterhin eine Komponente zur Drehzahlmessung auf, welche an den zweiten elektrischen Leiter angeschlossen ist und eingerichtet ist, eine Drehzahl des Motors aus einer Frequenz eines in dem ersten Leiter fließenden Betriebsstroms bzw. aus der an dem ersten Leiter anliegenden Wechselspannung zu ermitteln. Diese Ausführung besitzt insbesondere den Vorteil, dass die Drehzahl des Motors ohne zusätzlichen Sensor ermittelt werden kann.

In einer weiteren Ausführung weist die Vorrichtung ferner eine Komponente zur Stromsignaturanalyse auf, welche an den zweiten elektrischen Leiter angeschlossen ist und eingerichtet ist, ein Frequenzspektrum eines in dem ersten Leiter fließenden Betriebsstroms bzw. der an dem ersten Leiter anliegenden Wechselspannung zu analysieren. Diese Ausführung besitzt insbesondere den Vorteil, dass die Stromsignaturanalyse ohne zusätzlichen Sensor erfolgen kann.

In dem Verfahren zur Energieversorgung einer Sensoranordnung in einem Schienenfahrzeug wird eine Wechselspannung an einen zumindest zeitweise stromdurchflossenen ersten elektrischen Leiter, welcher einen Umrichter mit einem Motor des Schienenfahrzeugs verbindet, angelegt. Eine weitere Wechselspannung wird in einem zweiten elektrischen Leiter, welcher eine induktive Kopplung mit dem ersten elektrischen Leiter aufweist, mittels Induktion erzeugt. Die weitere Wechselspannung wird zur Energieversorgung eines Schaltungsmoduls, welches einer Verarbeitung von Signalen zumindest eines Sensors zur Erfassung von Daten und/oder eines Zustands einer Fahrzeugkomponente dient, verwendet.

Die vorstehend angegebenen Eigenschaften, Merkmale und Vorteile sowie die Art ihrer Ausführung werden im Folgenden eingehender erläutert durch ausführliche Beschreibung von Ausführungsbeispielen anhand der beigefügten Figuren.
Figur 1 zeigt in schematischer Darstellung eine Vorrichtung zur Energieversorgung einer Sensorbox.
Figur 2 zeigt in schematischer Darstellung eine Spule, die in der Vorrichtung eingesetzt werden kann.
Figur 3 zeigt ein Blockdiagramm einer Vorrichtung zur Energieversorgung.
Figur 4 zeigt ein Blockdiagramm gemäß Figur 3 mit einer Spule.
Figur 5 zeigt ein Blockdiagramm gemäß Figur 4 mit einer Sensoranordnung.
Figur 6 zeigt ein Blockdiagramm gemäß Figur 3 mit Umrichter und Motor.
Figur 7 zeigt ein Blockdiagramm gemäß Figur 6 mit einer Spule.
Figur 8 zeigt ein Blockdiagramm einer Vorrichtung zur Energieversorgung mit weiteren Komponenten.
Figur 9 zeigt ein Blockdiagramm gemäß Figur 8 mit einer anderen Anordnung der Komponenten.
Figur 10 zeigt ein Blockdiagramm gemäß Figur 8 mit einer anderen Auswahl der Komponenten.
Figur 11 zeigt ein Blockdiagramm gemäß Figur 10 mit einer anderen Auswahl und Anordnung der Komponenten.

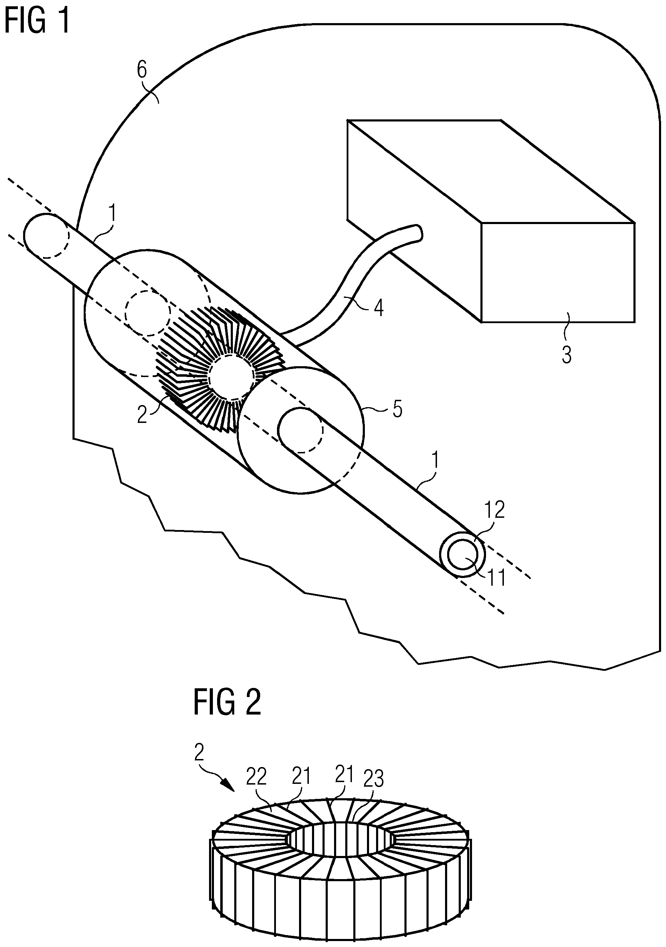

Figur 1 zeigt eine Anordnung aus einem ersten elektrischen Leiter 1, einem zweiten elektrischen Leiter 2, einer Sensorbox 3, einer Verbindungsleitung 4 zwischen dem zweiten elektrischen Leiter 2 und der Sensorbox 3, einem Gehäuse 5 und einer Fahrzeugkomponente 6. Der erste elektrische Leiter 1 und der zweite elektrische Leiter 2 sind induktiv miteinander gekoppelt.

Der erste elektrische Leiter 1 ist insbesondere ein Abschnitt eines Motorkabels, das zum Beispiel einen Leiter 11 und eine Ummantelung 12 aufweist. Ein solches Motorkabel wird zum Beispiel als Fahrmotorkabel eines Fahrzeugs, insbesondere eines elektrisch betriebenen Schienenfahrzeugs, verwendet. Das Motorkabel verbindet in diesem Fall einen Umrichter für eine Wechselspannung mit dem Antriebsmotor des Fahrzeugs. Das Motorkabel kann statt dessen aber auch eine andere Funktion besitzen. Wesentlich für die Energieversorgung ist, dass eine Wechselspannung an den ersten elektrischen Leiter 1 angelegt wird.

Der zweite elektrische Leiter 2 weist insbesondere eine Spule auf, was in der Figur 1 schematisch dargestellt ist. Bei Verwendung einer Spule mit einer Mehrzahl elektrisch leitfähiger Wicklungen wird eine höhere Wechselspannung induziert als bei Verwendung eines linearen elektrischen Leiters. Die Funktion der Spule entspricht der Funktion der Sekundärspule eines Transformators und braucht daher nicht weiter erläutert zu werden.

Die Sensorbox 3 enthält beispielsweise einen oder mehrere Sensoren und gegebenenfalls weitere Komponenten. Ein Schaltungsmodul, das zum Betrieb des Sensors und zur Erfassung, Speicherung und/oder Verarbeitung von Sensordaten vorgesehen ist, ist beispielsweise ebenfalls in der Sensorbox 3 angeordnet. Das Schaltungsmodul ist zum Beispiel eine integrierte Schaltung, insbesondere ein Mikroprozessor oder Mikrocontroller. Eine Verbindungsleitung 4 ist zwischen dem zweiten elektrischen Leiter 2 und der Sensorbox 3 vorhanden, um die erzeugte elektrische Energie und gegebenenfalls Signale in die Sensorbox 3 zu übertragen.

Die Sensorbox 3 ist für die Installation des Sensors zweckmäßig, aber nicht erforderlich. Sensoren können auch direkt an einer Fahrzeugkomponente 6 installiert sein. Das Schaltungsmodul kann zum Beispiel auch in einem Gehäuse 5, das zur Aufnahme des ersten elektrischen Leiters 1 und des zweiten elektrischen Leiters 2 vorgesehen werden kann, untergebracht sein. Die Fahrzeugkomponente 6 ist nur schematisch dargestellt, da der Sensor grundsätzlich an einer beliebigen Fahrzeugkomponente, insbesondere zum Beispiel am Motor, am Getriebe, am Radlager oder an einem Drehgestell eines Schienenfahrzeugs, angebracht sein kann.

Eine Induktion einer Wechselspannung in dem zweiten elektrischen Leiter 2 erfolgt im Wesentlichen aufgrund der induktiven Kopplung zwischen den zueinander parallelen Abschnitten des ersten elektrischen Leiters 1 und des zweiten elektrischen Leiters 2. Deshalb ist es zweckmäßig, wenn die Spule so gewickelt ist, dass Abschnitte der Wicklungen parallel zu dem ersten elektrischen Leiter 1 verlaufen. Wenn der erste elektrische Leiter 1 ein Abschnitt eines geradlinig angeordneten Motorkabels oder Fahrmotorkabels ist, kann es daher zweckmäßig sein, wenn jede Wicklung der Spule im Wesentlichen in einer der Ebenen angeordnet ist, in denen der erste elektrische Leiter 1 verläuft, das heißt, in einer der Ebenen des Ebenenbüschels, längs dessen Trägergerade oder Achse der erste elektrische Leiter 1 verläuft.

Figur 2 zeigt ein Beispiel für eine Spule, die als zweiter elektrischer Leiter 2 besonders geeignet ist, wenn der erste elektrische Leiter 1 geradlinig verläuft. Die elektrisch leitfähige Wicklung 21 ist zum Beispiel auf einen ringförmigen Kern 22 aufgebracht. Eine derartige Spule 2 wird so angeordnet, dass der Kern 22 den ersten elektrischen Leiter 1 konzentrisch umschließt, wie in der Figur 1 schematisch dargestellt ist. Der erste elektrische Leiter 1 verläuft in diesem Fall durch die innere Öffnung 23 des Kerns 22.

Der Kern 22 besitzt zum Beispiel die Form eines Torus oder die Form eines Hohlzylinders, wie in der Figur 2 gezeigt ist. Der Kern 22 weist beispielsweise ein magnetisierbares Material wie zum Beispiel Eisen oder eine Eisenverbindung auf, wenn eine starke induktive Kopplung bezweckt ist. Alternativ kann es genügen, wenn der Kern 22 nur die Funktion besitzt, die Wicklung 21 mechanisch zu stabilisieren; in diesem Fall ist der Kern 22 zum Beispiel aus einem Kunststoff.

Andere Formen des zweiten elektrischen Leiters 2 liegen im Rahmen der Erfindung. Insbesondere kann es genügen, wenn der zweite elektrische Leiter 2 nur einen zu dem ersten elektrischen Leiter 1 parallelen Abschnitt aufweist; eine solche Anordnung kann ausreichen, wenn das Schaltungsmodul nur einen sehr geringen Stromverbrauch hat oder wenn das Schaltungsmodul und/oder der Sensor nicht kontinuierlich betrieben werden soll(en).

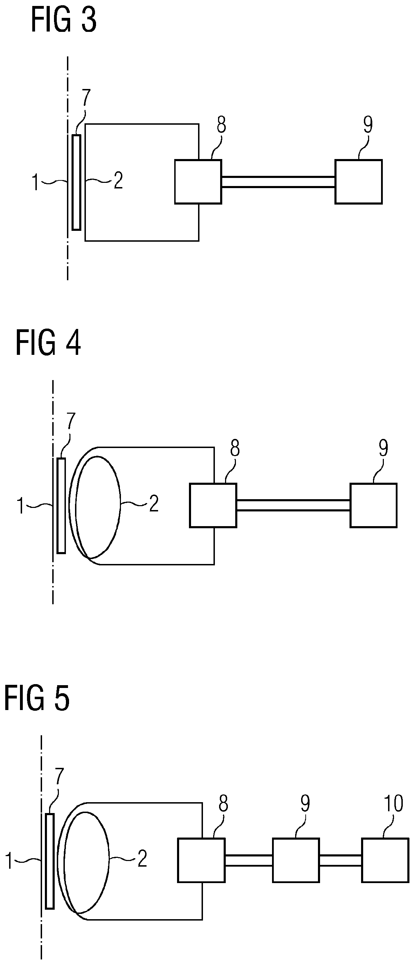

Figur 3 zeigt ein Blockschaltbild einer Vorrichtung zur Energieversorgung mit einem ersten elektrischen Leiter 1 und einem dazu parallelen zweiten elektrischen Leiter 2, zwischen denen eine induktive Kopplung 7 vorhanden ist. Der zweite elektrische Leiter 2 ist mit einer Komponente zur Gleichrichtung 8 verbunden, in der die induzierte Wechselspannung zum Beispiel mittels einer Diode gleichgerichtet wird. Die Gleichspannung wird dem Schaltungsmodul 9 als Betriebsspannung zugeführt. Das Schaltungsmodul 9 weist insbesondere einen Mikroprozessor oder Mikrocontroller auf. Wenn das Schaltungsmodul 9 eine integrierte Schaltung aufweist, kann die Komponente zur Gleichrichtung 8 darin integriert sein. Die Komponente zur Gleichrichtung 8 kann weggelassen werden, falls das Schaltungsmodul 9 mit Wechselspannung betrieben werden kann.

Es kann auch ein Sensor in dem Schaltungsmodul 9 integriert sein. Unter anderem können Trägheitssensoren, Temperatursensoren und Feuchtigkeitssensoren als integrierte Sensoren ausgebildet sein. Trägheitssensoren können zum Beispiel als mikroelektromechanische Systeme oder als mikromechanische Bauelemente in Silizium ausgebildet sein und zum Beispiel als Beschleunigungssensoren, Drehratensensoren oder Schwingungssensoren beziehungsweise Vibrationssensoren eingesetzt werden.

Figur 4 zeigt ein Blockschaltbild einer Vorrichtung zur Energieversorgung gemäß Figur 3, bei der der zweite elektrische Leiter 2 durch eine Spule gebildet ist. Die Spule ist in dem Diagramm der Figur 4 nur schematisch dargestellt. Die übrigen Komponenten entsprechen den Komponenten des Diagramms der Figur 3 und sind mit denselben Bezugszeichen versehen.

Figur 5 zeigt ein Blockschaltbild einer Vorrichtung zur Energieversorgung gemäß Figur 4, bei der zusätzlich eine separate Sensoranordnung 10 mit dem Schaltungsmodul 9 verbunden ist. Das Schaltungsmodul 9 ist zum Beispiel zusammen mit der Komponente zur Gleichrichtung 8 in einem Gehäuse 5 der elektrischen Leiter 1, 2 (Figur 1) angeordnet, und die Sensoranordnung 10 ist zum Beispiel in einer Sensorbox 3 angeordnet. Statt dessen können das Schaltungsmodul 9 und die Sensoranordnung 10 zusammen in einer Sensorbox 3 angeordnet sein. Die Komponente zur Gleichrichtung 8 kann separat angeordnet oder in dem Schaltungsmodul 9 integriert sein. Die Sensoranordnung 10 kann einen einzelnen Sensor oder statt dessen mehr als einen Sensor aufweisen. Es können verschiedene Typen von Sensoren darin vorhanden sein. Die beschriebene Energieversorgung ist für unterschiedliche Ausgestaltungen der Sensoren geeignet.

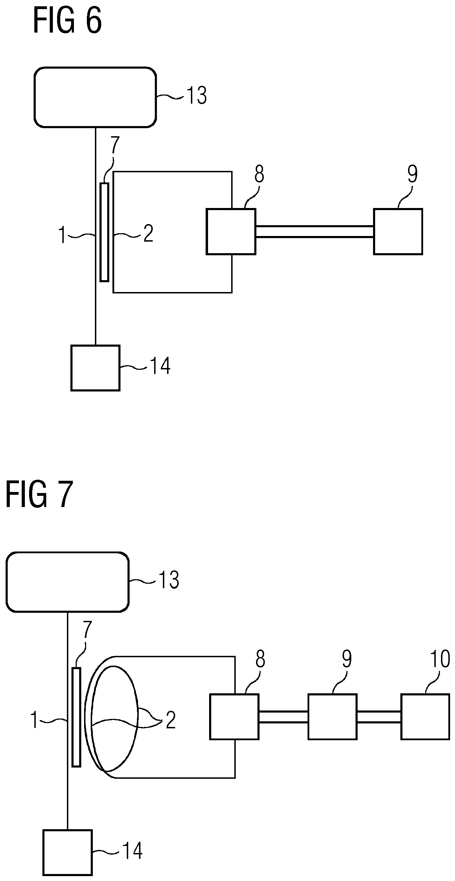

Figur 6 zeigt ein Blockschaltbild einer Vorrichtung zur Energieversorgung gemäß Figur 3 mit Umrichter und Motor. Der Umrichter 14 liefert die Wechselspannung, die die für die Energieversorgung des Schaltungsmoduls 9 vorgesehene weitere Wechselspannung in dem zweiten elektrischen Leiter 2 induziert. Der Umrichter 14 ist über ein Motorkabel mit dem Motor 13 verbunden. Der erste elektrische Leiter 1 wird in diesem Fall durch einen Abschnitt des Motorkabels gebildet. Wenn die Wechselspannung zum Antrieb des Motors 13 benutzt wird, kann das Motorkabel das Fahrmotorkabel sein. Die übrigen Komponenten entsprechen den Komponenten des Diagramms der Figur 3 und sind mit denselben Bezugszeichen versehen.

Figur 7 zeigt ein Blockschaltbild einer Vorrichtung zur Energieversorgung gemäß Figur 4 mit Umrichter und Motor. Der zweite elektrische Leiter 2 ist hierbei durch eine Spule gebildet. Die Spule ist in dem Diagramm der Figur 7 nur schematisch dargestellt. Die übrigen Komponenten entsprechen den Komponenten des Diagramms der Figur 6 und sind mit denselben Bezugszeichen versehen.

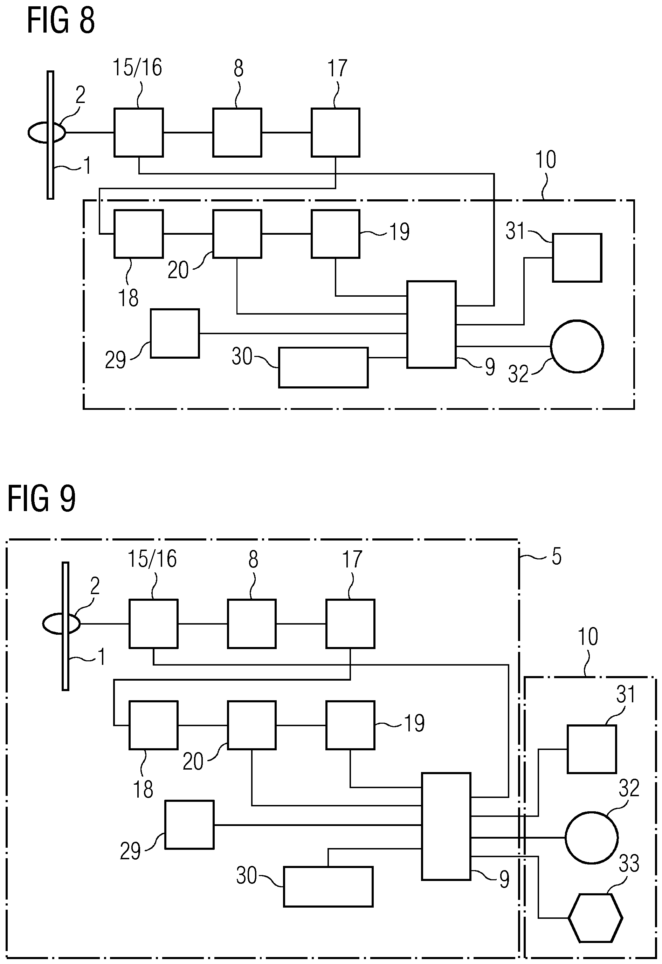

Figur 8 zeigt ein Blockschaltbild einer Vorrichtung zur Energieversorgung mit weiteren Komponenten. An die Spule 2 ist eine Komponente zur Drehzahlmessung 15 und/oder eine Komponente zur Stromsignaturanalyse 16 angeschlossen. Wenn der erste elektrische Leiter 1 zum Beispiel ein Abschnitt eines Fahrmotorkabels ist, kann die Drehzahl des Motors, der mit einer an das Fahrmotorkabel angelegten Wechselspannung angetrieben wird, aus der Frequenz der Wechselspannung ermittelt werden, wobei die Anzahl der Polpaare des Motors berücksichtigt wird. Es ist auch möglich, das Frequenzspektrum der angelegten Wechselspannung und dessen zeitliche Veränderung zu analysieren, um auf diese Weise Eigenschaften des Motors bestimmen zu können. Hierzu können an sich bekannte Methoden der Signalanalyse angewendet werden. Alternativ kann die Komponente zur Drehzahlmessung 15 und/oder zur Stromsignaturanalyse 16 auch weggelassen sein.

Bei der Stromsignaturanalyse wird der Motorstrom überwacht, was zum Beispiel mittels Überwachung einer der drei Phasen einer angelegten Betriebsspannung geschehen kann. Die betreffende Phase liegt üblicherweise an einem von drei Fahrmotorkabeln an, und ein Abschnitt dieses Fahrmotorkabels kann in der hier beschriebenen Vorrichtung als erster elektrischer Leiter 1 eingesetzt werden. Die Statorwicklungen des Motors werden als Wandler (transducer) verwendet, und die im Rotor induzierten Ströme werden als Signale abgegriffen und zum Beispiel einem Spektrumanalysator zugeleitet. Unterschiedliche Fehlerbedingungen führen dazu, dass der ideale sinusförmige Signalverlauf moduliert wird. Aus der Analyse dieser Modulation kann auf die vorhandenen Fehlerbedingungen rückgeschlossen werden. Eine derartige Stromsignaturanalyse dient zum Beispiel dazu, den Zustand des Motors zu überwachen, Schäden des Motors, die durch Verschleiß, fehlerhafte Montage oder Überlastung eintreten, zum Beispiel eine Unwucht, Lagerschäden oder Schäden an der Aufhängung zu detektieren oder eine permanente Selbstkontrolle des Motorzustandes zu implementieren, ohne dass zusätzliche Sensoren angebracht werden müssen.

Der Komponente zur Gleichrichtung 8 kann eine Komponente zur Spannungsbegrenzung 17 nachgeschaltet sein, mit der die Betriebsspannung zum Beispiel unter Verwendung eines Shunt-Widerstandes begrenzt wird. Eine Spannungsbegrenzung kann erforderlich sein, wenn die angelegte Wechselspannung stark schwankt, so dass die induzierte Wechselspannung zeitweilig über dem für die Betriebsspannung zulässigen Bereich liegt. Wenn nur geringe Schwankungen der angelegten Wechselspannung zu erwarten sind, kann die Betriebsspannung allein durch die Bemessung des zweiten elektrischen Leiters 2 geeignet eingestellt werden, so dass auf die Komponente zur Spannungsbegrenzung 17 verzichtet werden kann.

Eine Komponente zur Gleichstromwandlung 18 ist fakultativ zwischen die Komponente zur Gleichrichtung 8 beziehungsweise die Komponente zur Spannungsbegrenzung 17 und das Schaltungsmodul 9 beziehungsweise eine Komponente zur Energiespeicherung 20 geschaltet. Die Komponente zur Energiespeicherung 20 ist zum Beispiel ein Kondensator oder ein kleiner Akkumulator und dient dazu, eine gleichmäßige Energieversorgung sicherzustellen. Das kann insbesondere nützlich sein, wenn die Wechselspannung nicht kontinuierlich an den ersten elektrischen Leiter 1 angelegt wird, so dass zwischenzeitlich keine Wechselspannung in dem zweiten elektrischen Leiter 2 induziert wird. Das kann zum Beispiel vorkommen, wenn der erste elektrische Leiter 1 ein Abschnitt eines Fahrmotorkabels ist und zeitweilig weder eine Beschleunigung noch eine Abbremsung des Fahrzeugs über den Motor erfolgt, so dass während dieser Zeit kein Strom fließt. Die Komponente zur Energiespeicherung 20 ist auch mit dem Schaltungsmodul 9 verbunden, so dass das Schaltungsmodul 9 stets ausreichend mit elektrischer Energie versorgt wird.

Eine fakultative weitere Komponente zur Gleichstromwandlung 19 kann zwischen die Komponente zur Energiespeicherung 20 und das Schaltungsmodul 9 geschaltet sein. Die Auswahl und Schaltung dieser und anderer weiterer Komponenten kann unabhängig von der Energieversorgung an die jeweils vorgesehene Anwendung der Vorrichtung angepasst werden.

Die Figur 8 zeigt noch ein fakultatives Kommunikationsmodul 29, das dafür vorgesehen werden kann, die in dem Schaltungsmodul 9 erfassten oder verarbeiteten Daten auszugeben beziehungsweise an Anzeigeinstrumente zu übermitteln. Ein ebenfalls fakultativer Datenspeicher 30, der zum Beispiel Flash-Speicher, EEPROMs oder andere elektronische Speicher, insbesondere nichtflüchtige elektronische Speicher, aufweisen kann, ist beispielsweise zur Datenspeicherung vorgesehen und mit dem Schaltungsmodul 9 verbunden.

In dem Diagramm der Figur 8 sind Sensoren als Beispiel eingetragen: ein erster Sensor 31, der zum Beispiel ein Temperatursensor sein kann, und ein zweiter Sensor 32, der zum Beispiel ein mikromechanischer Trägheitssensor sein kann. Die Anzahl und Beschaffenheit der Sensoren ist beliebig und kann den Anforderungen der jeweiligen Anwendung der Vorrichtung entsprechend gewählt werden. Die Sensoren 31, 32 sind mit dem Schaltungsmodul 9 verbunden.

Mit dem strichpunktierten Rahmen ist in der Figur 8 angedeutet, dass die Sensoranordnung 10 zusätzlich zu den Sensoren 31, 32 das Schaltungsmodul 9, gegebenenfalls die Komponenten zur Gleichstromwandlung 18, 19, die Komponente zur Energiespeicherung 20, das Kommunikationsmodul 29 und den Datenspeicher 30 aufweisen kann. Die Sensoranordnung 10 ist zum Beispiel in einer Sensorbox 3 installiert.

Figur 9 zeigt ein Blockschaltbild einer Vorrichtung zur Energieversorgung gemäß Figur 8 mit einer anderen Anordnung der Komponenten. In dem Diagramm der Figur 9 befindet sich in der Sensoranordnung 10 zusätzlich ein dritter Sensor 33, der zum Beispiel ein Feuchtigkeitssensor oder ein weiterer Trägheitssensor sein kann. Die übrigen Komponenten entsprechen den Komponenten des Diagramms der Figur 8 und sind mit denselben Bezugszeichen versehen. Auch in dieser Vorrichtung kann die Komponente zur Drehzahlmessung 15 und/oder zur Stromsignaturanalyse 16 weggelassen sein.

Mit den strichpunktierten Rahmen ist in der Figur 9 angedeutet, dass die Komponente zur Gleichrichtung 8, das Schaltungsmodul 9, die Komponente zur Drehzahlmessung 15 beziehungsweise die Komponente zur Stromsignaturanalyse 16, die Komponente zur Spannungsbegrenzung 17, die Komponenten zur Gleichstromwandlung 18, 19, die Komponente zur Energiespeicherung 20, das Kommunikationsmodul 29 und der Datenspeicher 30 in einem Gehäuse 5 des ersten elektrischen Leiters 1 und des zweiten elektrischen Leiters 2 angeordnet sein können, während die Sensoranordnung 10 die Sensoren 31, 32 und 33 enthält. Eine andere Aufteilung der Komponenten auf das Gehäuse 5 und die Sensoranordnung 10, die in einer Sensorbox installiert sein kann, ist statt dessen möglich. Komponenten dieser Vorrichtung können auch außerhalb des Gehäuses 5 oder der Sensorbox 3 angeordnet werden. Das Gehäuse 5 und/oder die Sensorbox 3 können weggelassen sein.

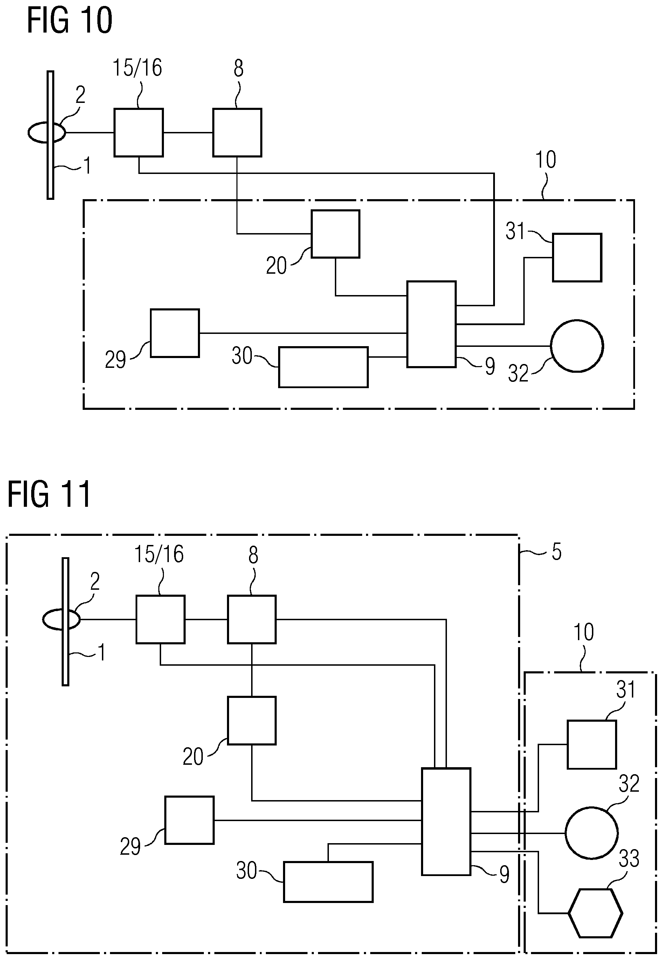

Figur 10 zeigt ein Blockschaltbild einer Vorrichtung zur Energieversorgung gemäß Figur 8 mit einer anderen Auswahl der Komponenten. Die in dem Beispiel der Figur 10 vorhandenen Komponenten entsprechen Komponenten des Diagramms der Figur 8 und sind mit denselben Bezugszeichen versehen. In dem Beispiel der Figur 10 sind die Komponenten zur Spannungsbegrenzung und zur Gleichstromwandlung weggelassen. Außerdem ist mit dem strichpunktierten Rahmen in der Figur 10 angedeutet, dass die Sensoranordnung 10 in diesem Beispiel zusätzlich zu den Sensoren 31, 32 das Schaltungsmodul 9, die Komponente zur Energiespeicherung 20, das Kommunikationsmodul 29 und den Datenspeicher 30 aufweisen kann. Auch in diesem Beispiel kann die Anordnung der Komponenten auf eine abweichende Weise vorgenommen sein. Insbesondere ist die Komponente zur Drehzahlmessung 15 und/oder zur Stromsignaturanalyse 16 weggelassen.

Figur 11 zeigt ein Blockschaltbild einer Vorrichtung zur Energieversorgung gemäß Figur 10 mit einer anderen Auswahl und Anordnung der Komponenten. Die in dem Beispiel der Figur 11 vorhandenen Komponenten entsprechen Komponenten des Diagramms der Figur 9 und sind mit denselben Bezugszeichen versehen. Mit den strichpunktierten Rahmen ist in der Figur 11 angedeutet, dass die Komponente zur Gleichrichtung 8, das Schaltungsmodul 9, eine Komponente zur Gleichstromwandlung 19, die Komponente zur Energiespeicherung 20, das Kommunikationsmodul 29 und der Datenspeicher 30 in einem Gehäuse 5 des ersten elektrischen Leiters 1 und des zweiten elektrischen Leiters 2 angeordnet sein können, während die Sensoranordnung 10 die Sensoren 31, 32 und 33 enthält. Eine andere Aufteilung der Komponenten auf das Gehäuse 5 und die Sensoranordnung 10, die in einer Sensorbox installiert sein kann, ist statt dessen möglich. Auch in dem Beispiel der Figur 11 können Komponenten außerhalb des Gehäuses 5 oder der Sensorbox 3 angeordnet werden. Das Gehäuse 5 und/oder die Sensorbox 3 können insbesondere weggelassen sein. Die Komponente zur Drehzahlmessung 15 und/oder zur Stromsignaturanalyse 16 kann weggelassen sein.

Die beschriebene Vorrichtung ist insbesondere ein Teil eines Systems mit Energieversorgung einer Sensoranordnung zur Erfassung von Daten einer Fahrzeugkomponente. Die Energieversorgung ist beispielsweise speziell für eine Motor-/Getriebe-Sensorapplikation vorgesehen. In einem solchen System wird elektrische Energie induktiv aus dem Fahrmotorkabel ausgekoppelt, insbesondere mit einer konzentrisch um das Fahrmotorkabel angeordneten Spule.

Die Vorrichtung und das System haben insbesondere den Vorteil, dass lange Kabelverbindungen und Steckerverbindungen zur Fahrzeugelektrik vermieden werden. Außerdem wird eine vergleichsweise hohe und im Wesentlichen kontinuierliche Energieversorgung erzielt, was unter anderem die folgenden Vorteile hat: Über den Sensor oder die Sensoren können kontinuierlich Daten erfasst, verarbeitet und gegebenenfalls auch gespeichert werden; die Energieversorgung ist besonders geeignet für eine kabellose Datenübertragung; es entfällt die Instandhaltung einer Batterie; und es können mehrere Sensorapplikationen über sehr kurze autarke Kabelverbindungen versorgt werden. Darüber hinaus kann die Fahrmotor-Speisefrequenz (Motorgrundfrequenz) detektiert werden und hieraus die Fahrmotordrehzahl unter Berücksichtigung der Anzahl der Polpaare ermittelt werden. Zudem können Umrichtertaktsperren, während deren die Wechselspannung abgeschaltet ist, mit Hilfe einfacher Energiespeicher überbrückt werden.

Bei dem Verfahren zur Energieversorgung eines Schaltungsmoduls und/oder einer Sensoranordnung einer Fahrzeugkomponente wird eine Wechselspannung an einen ersten elektrischen Leiter, der einen Umrichter mit einem Motor verbindet, angelegt, um eine weitere Wechselspannung in einem zweiten elektrischen Leiter, der eine induktive Kopplung mit dem ersten elektrischen Leiter aufweist, mittels Induktion zu erzeugen und damit ein Schaltungsmodul und/oder eine Sensoranordnung mit elektrischer Energie zu versorgen. Mit diesem Verfahren werden unter anderem die folgenden Vorteile erzielt: Es wird eine sichere, kabellose und ausreichende Energieversorgung einer an oder in einer Fahrzeugkomponente angebrachten Sensorapplikation ermöglicht; diese Art der Energieversorgung ermöglicht auch eine zumindest weitestgehend kontinuierliche und kabellose Datenkommunikation mit am Fahrzeug angebrachten und/oder ortsfesten Empfangs- und Sendeeinrichtungen; die Drehzahl von Motor, Getriebe und/oder Triebachse kann ohne zusätzliche Sensorik bestimmt werden und weist eine höhere Genauigkeit auf, als bspw. Magnetfeldsensoren.

Die Erfindung ist anhand von Ausführungsbeispielen ausführlich erläutert und beschrieben worden.

## Patentansprüche

1. Vorrichtung zur Energieversorgung einer Sensoranordnung (10) in einem Schienenfahrzeug, zumindest aufweisend
- einen zweiten elektrischen Leiter (2), der eine induktive Kopplung (7) mit einem ersten elektrischen Leiter (1) aufweist, wobei der erste elektrische Leiter (1) als zumindest Teil eines Motorkabels (11, 12) ausgestaltet ist, welches einen Umrichter (14) mit einem Motor (13) des Schienenfahrzeugs verbindet, wobei zumindest ein Abschnitt des zweiten elektrischen Leiters (2) als eine Wicklung einer Spule (21, 22) ausgestaltet ist, und wobei die Spule (21, 22) einen ringförmigen Kern (22) aufweist und der Kern (22) den ersten elektrischen Leiter (1) konzentrisch umschließt, und
- ein mittels einer Betriebsspannung betriebenes Schaltungsmodul (9) zur Verarbeitung von Signalen zumindest eines Sensors, wobei der zumindest eine Sensor einer Erfassung von Daten und/oder eines Zustands einer Fahrzeugkomponente (6) dient,
wobei
- das Schaltungsmodul (9) mit dem zweiten elektrischen Leiter (2) verbunden ist, und
- der zweite elektrische Leiter (2) zur Erzeugung der Betriebsspannung aus einer an dem ersten Leiter (1) anliegenden Wechselspannung mittels Induktion in dem zweiten elektrischen Leiter (2) konfiguriert sind, wobei der zumindest eine Sensor Teil der Sensoranordnung (10) ist und das Schaltungsmodul (9) mit der Sensoranordnung (10) verbunden oder ebenfalls Teil der Sensoranordnung (10) ist.

2. Vorrichtung nach Anspruch 1, wobei die Sensoranordnung (10) konfiguriert ist, Daten des Motors (13), insbesondere des als ein Antriebsmotor ausgestalteten Motors (13), eines Getriebes, eines Lüftermotors, eines Pumpenmotors oder eines Kompressormotors als Komponente des Fahrzeugs, welche insbesondere in oder an einem Drehstell des Schienenfahrzeugs angeordnet ist, zu erfassen.

3. Vorrichtung nach einem der vorhergehenden Ansprüche, ferner aufweisend eine Komponente zur Gleichrichtung (8), welche zwischen dem zweiten elektrischen Leiter (2) und dem Schaltungsmodul (9) geschaltet ist.

4. Vorrichtung nach einem der vorhergehenden Ansprüche, ferner aufweisend eine Komponente zur Energiespeicherung (20), welche mit dem zweiten elektrischen Leiter (2) und dem Schaltungsmodul (9) verbunden ist.

5. Vorrichtung nach Anspruch 1, wobei die Spule (21, 22) das Motorkabel (11, 12) umschließt.

6. Vorrichtung nach einem der vorhergehenden Ansprüche, ferner aufweisend eine Komponente zur Drehzahlmessung (15), welche an den zweiten elektrischen Leiter (2) angeschlossen ist und eingerichtet ist, eine Drehzahl des Motors (13) aus einer Frequenz eines in dem ersten Leiter (1) fließenden Betriebsstroms zu ermitteln.

7. Vorrichtung nach einem der vorhergehenden Ansprüche, ferner aufweisend eine Komponente zur Stromsignaturanalyse (16), welche an den zweiten elektrischen Leiter (2) angeschlossen ist und eingerichtet ist, ein Frequenzspektrum eines in dem ersten Leiter (1) fließenden Betriebsstroms zu analysieren.

8. Verfahren zur Energieversorgung einer Sensoranordnung (10) in einem Schienenfahrzeug, bei dem
- eine Wechselspannung an einen zumindest zeitweise stromdurchflossenen ersten elektrischen Leiter (1), welcher einen Umrichter (14) mit einem Motor (13) des Schienenfahrzeugs verbindet, angelegt wird, wobei der erste elektrische Leiter (1) als zumindest Teil eines Motorkabels (11, 12) ausgestaltet ist, welches den Umrichter (14) mit dem Motor (13) verbindet,
- eine weitere Wechselspannung in einem zweiten elektrischen Leiter (2), welcher eine induktive Kopplung (7) mit dem ersten elektrischen Leiter (1) aufweist, mittels Induktion erzeugt wird, wobei zumindest ein Abschnitt des zweiten elektrischen Leiters (2) als eine Wicklung einer Spule (21, 22) ausgestaltet ist, und wobei die Spule (21, 22) einen ringförmigen Kern (22) aufweist und der Kern (22) den ersten elektrischen Leiter (1) konzentrisch umschließt, und
- die weitere Wechselspannung zur Energieversorgung eines Schaltungsmoduls (9), welches einer Verarbeitung von Signalen zumindest eines Sensors zur Erfassung von Daten und/oder eines Zustands einer Fahrzeugkomponente (6) dient, verwendet wird, wobei der zumindest eine Sensor Teil der Sensoranordnung (10) ist und das Schaltungsmodul (9) mit der Sensoranordnung (10) verbunden oder ebenfalls Teil der Sensoranordnung (10) ist.

## Claims

1. Device for supplying energy to a sensor arrangement (10) in a rail vehicle, at least having
- a second electrical conductor (2) which has an inductive coupling (7) to a first electrical conductor (1), wherein the first electrical conductor (1) is embodied as at least part of a motor cable (11, 12) which connects a converter (14) to a motor (13) of the rail vehicle, wherein at least one section of the second electrical conductor (2) is embodied as a winding (21) of a coil (21, 22), and wherein the coil (21, 22) has an annular core (22) and the core (22) surrounds the first electrical conductor (1) concentrically, and
- a switching module (9) which is operated by means of an operating voltage and has the purpose of processing signals of at least one sensor, wherein the at least one sensor serves to acquire data and/or a state of a vehicle component (6),
wherein
- the switching module (9) is connected to the second electrical conductor (2), and
- the second electrical conductor (2) is configured to generate the operating voltage from an alternating voltage, applied to the first conductor (1), by means of induction in the second electrical conductor (2), wherein the at least one sensor is part of the sensor arrangement (10) and the switching module (9) is connected to the sensor arrangement (10) or is likewise part of the sensor arrangement (10).

2. Device according to claim 1, wherein
the sensor arrangement (10) is configured to acquire data from the motor (13), in particular the motor (13) embodied as a drive motor, a transmission, a fan motor, a pump motor or a compressor motor as a component of the vehicle which is arranged in particular in or on a bogie of the rail vehicle.

3. Device according to one of the preceding claims, further having
a component for rectification (8), which is connected between the second electrical conductor (2) and the switching module (9) .

4. Device according to one of the preceding claims, further having
a component for energy storage (20), which is connected to the second electrical conductor (2) and to the switching module (9) .

5. Device according to claim 1, wherein
the coil (21, 22) surrounds the motor cable (11, 12).

6. Device according to one of the preceding claims, further having
a component for rotational speed measurement (15), which is attached to the second electrical conductor (2) and is set up to determine a rotational speed of the motor (13) from a frequency of an operating current that flows in the first conductor (1).

7. Device according to one of the preceding claims, further having
a component for current signature analysis (16), which is attached to the second electrical conductor (2) and is set up to analyse a frequency spectrum of an operating current that flows in the first conductor (1).

8. Method for supplying energy to a sensor arrangement (10) in a rail vehicle, in which
- an alternating voltage is applied to a first electrical conductor (1) through which a current flows at least some of the time and which connects a converter (14) to a motor (13) of the rail vehicle, wherein the first electrical conductor (1) is embodied as at least part of a motor cable (11, 12) which connects the converter (14) to the motor (13),
- a further alternating voltage is generated in a second electrical conductor (2), which has an inductive coupling (7) to the first electrical conductor (1), by means of induction, wherein at least one section of the second electrical conductor (2) is embodied as a winding of a coil (21, 22), and wherein the coil (21, 22) has an annular core (22) and the core (22) surrounds the first electrical conductor (1) concentrically, and
- the further alternating voltage is used to supply energy to a switching module (9) which serves to process signals of at least one sensor for acquiring data and/or a state of a vehicle component (6), wherein the at least one sensor is part of the sensor arrangement (10) and the switching module (9) is connected to the sensor arrangement (10) or is likewise part of the sensor arrangement (10).

## Revendications

1. Equipement d'alimentation en énergie d'un dispositif (10) capteur d'un véhicule ferroviaire, comprenant au moins
- un deuxième conducteur (2) électrique, qui a un couplage (7) inductif avec un premier conducteur (1) électrique, dans lequel le premier conducteur (1) électrique est conformé comme au moins une partie d'un câble (11, 12) de moteur, qui relie un onduleur (14) à un moteur (13) du véhicule ferroviaire, dans lequel au moins un tronçon du deuxième conducteur (2) électrique est sous la forme d'un enroulement d'une bobine (21, 22) et dans lequel la bobine (21, 22) a un noyau (22) annulaire et le noyau (22) entoure concentriquement le premier conducteur (1) électrique, et
- un module (9) de circuit alimenté au moyen d'une tension de fonctionnement pour le traitement de signaux d'au moins un capteur, dans lequel le au moins un capteur sert à la détection de données et/ou d'un état d'un élément (6) du véhicule,
dans lequel
- le module (9) de circuit est relié au deuxième conducteur (2) électrique, et
- le deuxième conducteur (2) électrique est configuré pour, au moyen d'une induction dans le deuxième conducteur (2) électrique, la production de la tension de fonctionnement à partir d'une tension alternative s'appliquant au premier conducteur (1), dans lequel le au moins un capteur est une partie du dispositif (10) capteur et le module (9) de circuit est connecté au dispositif (10) capteur ou fait partie également du dispositif (10) capteur.

2. Equipement suivant la revendication 1, dans lequel
le dispositif (10) capteur est configuré pour détecter des données du moteur (13), en particulier du moteur (13) conformé en moteur d'entraînement, d'une transmission, d'un moteur de ventilateur, d'un moteur de pompe ou d'un moteur de compresseur comme élément du véhicule, qui est disposé en particulier dans ou sur un boggie du véhicule ferroviaire.

3. Equipement suivant l'une des revendications précédentes, comportant en outre
un composant de redressement (8), qui est monté entre le deuxième conducteur (2) électrique et le module (9) de circuit.

4. Equipement suivant l'une des revendications précédentes, comportant en outre
un composant d'accumulation (20) d'énergie, qui est relié au deuxième conducteur (2) électrique et au module (9) de circuit.

5. Equipement suivant la revendication 1, dans lequel
la bobine (21, 22) entoure le câble (11, 12) du moteur.

6. Equipement suivant l'une des revendications précédentes, comportant en outre
un composant de mesure (15) à la vitesse de rotation, qui est raccordé au deuxième conducteur (2) électrique et qui est agencé pour déterminer une vitesse de rotation du moteur (13) à partir d'une fréquence d'un courant de fonctionnement passant dans le premier conducteur (1).

7. Equipement suivant l'une des revendications précédentes, comportant en outre
un composant d'analyse (16) de la signature d'un courant, qui est raccordé au deuxième conducteur (2) électrique et qui est agencé pour analyser un spectre de fréquence d'un courant de fonctionnement passant dans le premier conducteur (1).

8. Procédé d'alimentation en énergie d'un dispositif (10) capteur d'un véhicule ferroviaire, dans lequel
- on applique une tension alternative à un premier conducteur (1) électrique parcouru au moins de temps à autre par du courant et reliant un onduleur (14) à un moteur (13) du véhicule ferroviaire, dans lequel le premier conducteur (1) électrique est conformé comme au moins une partie d'un câble (11, 12) du moteur, qui relie l'onduleur (14) au moteur (13),
- on produit au moyen d'une induction une autre tension alternative dans un deuxième conducteur (2) électrique, qui a un couplage (7) inductif avec le premier conducteur (1) électrique, dans lequel au moins un tronçon du deuxième conducteur (2) électrique est conformé en enroulement d'une bobine (21, 22) et dans lequel la bobine (21, 22) a un noyau (22) annulaire et le noyau (22) entoure concentriquement le premier conducteur (1) électrique, et
- on utilise l'autre tension alternative pour l'alimentation en énergie d'un module (9) de circuit, qui sert à traiter des signaux d'au moins un capteur de détection de données et/ou d'un état d'un élément (6) du véhicule, le au moins un capteur faisant partie du dispositif (10) capteur et le module (9) de circuit étant relié au dispositif (10) capteur ou faisant également partie du dispositif (10) capteur.
